# FASCICULE DE BREVET EUROPEEN

(11) **EP 2 839 116 B1**
(45) Date de publication et mention de la délivrance du brevet: **04.05.2016**
(21) Numéro de dépôt: 13720002.8
(22) Date de dépôt: 12.04.2013
(51) Int. Cl.: F01D 9/04, F01D 25/28, B23K 1/00, B23P 15/00, B23P 15/04, B23P 6/00

(54) **PROCÉDÉ ET UN OUTILLAGE DE MONTAGE D'UN ÉTAGE REDRESSEUR**
VERFAHREN UND WERKZEUG ZUR MONTAGE EINER LEITSCHAUFELSTUFE
METHOD AND TOOLING FOR ASSEMBLING A GUIDE VANE STAGE

(30) Priorité: 16.04.2012 FR 1253493
(43) Date de publication de la demande: 25.02.2015
(73) Titulaire: SNECMA, 75015 Paris (FR)
(72) Inventeur: CHARDONNET, Romain René, Marcel, F-77550 Moissy Cramayel Cedex (FR); PETIT, Patrick, Gilbert, F-77550 Moissy Cramayel Cedex (FR); MARTINEZ, Alain, F-77550 Moissy Cramayel Cedex (FR)
(74) Mandataire: Robert, Mathias
(86) Numéro de dépôt international: PCT/FR2013/050800
(87) Numéro de publication internationale: WO 2013/156715

(56) Documents cités:
- EP-A1- 1 219 785
- EP-A1- 1 908 923
- FR-A1- 2 958 323
- US-A1- 2004 213 673

## Description

La présente invention concerne un procédé et un outillage de montage d'un étage redresseur, en particulier pour un compresseur basse-pression de turbomachine.

Dans un compresseur de turbomachine, un étage redresseur comporte deux viroles coaxiales s'étendant l'une à l'intérieur de l'autre et reliées par des pales sensiblement radiales qui sont fixées par leurs extrémités radiales aux viroles.

La virole externe de l'étage redresseur comporte des orifices radiaux dans lesquels sont engagées et fixées, en général par soudage, les extrémités radialement externes des pales. La virole interne comporte des orifices radiaux dans lesquels sont engagées avec jeu les extrémités radialement internes des pales, ces jeux étant de l'ordre de 2 à 3 mm environ. Le document FR 2 958 323 décrit un procédé de montage d'un otage redresseur selon l'art antérieur.

Dans la technique actuelle, les extrémités internes des pales sont solidarisées à la virole interne au moyen d'une résine polymérisable de scellement qui est appliquée sur la surface interne de la virole interne et qui, après durcissement, assure la fixation des pales à la virole interne. La résine forme un bloc annulaire à l'intérieur de la virole interne, dans lequel sont noyées les extrémités radialement internes des pales et dont la périphérie interne définit une piste abradable destinée à coopérer avec des léchettes annulaires d'un rotor pour former un joint d'étanchéité du type à labyrinthe.

Avant d'appliquer la résine sur la virole interne, on injecte cette résine dans les jeux précités entre les pales et les bords des orifices de la virole interne, sur tout le pourtour de chacune des pales. Ceci permet de combler les jeux au préalable et d'éviter qu'une partie de la résine passe ensuite à travers ces jeux lors de son application sur la virole interne (pour éviter le gaspillage de résine et limiter le temps de nettoyage de l'étage redresseur destiné à supprimer les éventuelles coulures de la résine). L'injection de résine dans les jeux est réalisée au moyen d'une seringue remplie par un opérateur, cette étape d'injection étant longue et coûteuse (environ 8 heures pour un étage redresseur), délicate, salissante et difficilement reproductible. Pour limiter les coulures de la résine lors de son application, on peut la stocker dans un réfrigérateur avant son application afin d'augmenter sa viscosité. Cependant, bien que cela facilite la mise en oeuvre de la résine, cela entraîne une gestion complexe des lots de résine.

La présente invention apporte une solution simple, efficace et économique à ce problème.

Elle propose à cet effet un procédé de montage d'un étage redresseur comportant une virole interne et une virole externe coaxiales, reliées par des pales sensiblement radiales, caractérisé en ce qu'il comporte les étapes consistant à :
(a) engager les extrémités radialement externes des pales dans des orifices de la virole externe et engager avec jeu les extrémités radialement internes desdites pales dans des orifices de la virole interne,
(b) fixer les extrémités externes des pales à la virole externe, par exemple par soudage ;
(c) maintenir des plaques en appui sur la surface externe de la virole interne, de façon à ce que les plaques recouvrent de façon étanche et au moins partiellement les jeux formés entre les ouvertures de la virole interne et les pales, les plaques étant positionnées circonférentiellement entre les pales,
(d) appliquer une résine de scellement sur la surface interne de la virole interne, de façon à ce que la résine remplisse les jeux précités et que les extrémités radialement internes des pales soient noyées dans la résine.

De cette manière, lors de son application sur la surface interne de la virole interne, la résine vient combler les jeux formés entre les ouvertures de la virole interne et les pales sans déborder sur la surface externe de la virole interne, grâce à la présence des plaques qui viennent fermer de manière étanche ces jeux.

L'invention permet de supprimer l'étape de la technique antérieure qui consiste à injecter la résine au moyen d'une seringue dans les jeux précités, avant d'appliquer la résine de scellement sur la surface interne de cette virole. Cette étape d'injection, qui est délicate et difficile à mettre en oeuvre, est remplacée par une étape plus simple et beaucoup moins longue de mise en position et de maintien des plaques en appui sur la surface externe de la virole interne.

De préférence, la résine de scellement est à base de silicone, par exemple de type RTV (Room Temperature Vulcanisation).

Selon une caractéristique de l'invention, lors de l'étape (c), on dispose des outillages circonférentiellement entre les pales, chaque outillage comportant une plaque interne venant en appui sur la surface externe de la virole interne et un organe d'appui externe, tel par exemple qu'une plaque externe, venant en appui sur la surface interne de la virole externe, des moyens élastiques étant disposés entre la plaque interne et l'organe d'appui externe de façon à contraindre la plaque interne en appui sur la virole interne.

Avantageusement, chaque outillage peut occuper une position d'introduction dans laquelle la plaque interne et l'organe d'appui externe sont rapprochés l'un de l'autre, à l'encontre des moyens élastiques, et une position de montage dans laquelle la plaque interne et l'organe d'appui externe sont écartés l'un de l'autre à l'aide des moyens élastiques de façon à contraindre la plaque interne en appui sur la virole interne.

Chaque plaque interne peut également comporter deux bords latéraux épousant les formes des surfaces d'intrados et d'extrados des deux pales adjacentes correspondantes.

De plus, chaque plaque interne peut comporter au moins une butée de positionnement venant en appui sur un bord de fuite ou un bord d'attaque de l'une des aubes adjacentes correspondantes.

Cette caractéristique facilite et garantit le bon positionnement des plaques par rapport aux pales.

L'invention concerne également un outillage destiné au montage d'un étage redresseur de turbomachine, comportant une plaque d'appui interne et un organe d'appui externe, tel par exemple qu'une plaque d'appui externe, reliés par au moins une entretoise à longueur réglable entre une position d'introduction dans laquelle la plaque interne et l'organe d'appui externe sont rapprochés l'un de l'autre et une position de montage dans laquelle la plaque interne et l'organe d'appui externe sont écartés l'un de l'autre, des moyens élastiques tendant à écarter la plaque interne et l'organe d'appui externe en position de montage.

De préférence, la plaque interne est revêtue d'une couche de matériau déformable, par exemple en mousse de silicone, de façon à éviter toute dégradation de la virole interne contre laquelle elle est destinée à prendre appui.

L'entretoise peut comporter deux parties tubulaires montées coulissantes l'une dans l'autre, l'une desdites parties comportant un plot monté de façon déplaçable dans une ouverture de l'autre desdites parties, ladite ouverture comportant une zone de coulissement libre du plot s'étendant dans l'axe de coulissement, prolongée par au moins une zone de blocage du plot s'étendant perpendiculairement à la zone de coulissement.

Ainsi, préalablement au montage de l'outillage entre les viroles interne et externe de l'étage redresseur, l'entretoise est rétractée et le plot est logé dans la zone de blocage de façon à empêcher le coulissement d'une partie par rapport à l'autre. Après montage de l'outillage, le plot est extrait de la zone de blocage et amené dans la zone de coulissement où les deux parties peuvent coulisser librement sous l'action des moyens élastiques qui tendent à plaquer la plaque interne sur la surface externe de la virole interne et l'organe d'appui externe sur la surface interne de la virole externe.

L'organe d'appui externe peut également se présenter sous la forme d'une plaque externe revêtue d'une couche de matériau déformable, par exemple en mousse de silicone, de façon à éviter toute dégradation de la virole externe contre laquelle la plaque externe est destinée à prendre appui.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une demi-vue schématique partielle en coupe axiale d'un compresseur de turbomachine, comportant un étage redresseur ;
- la figure 2 est une vue schématique partielle en perspective de la virole interne et de pales de l'étage redresseur de la figure 1 ;
- la figure 3 est une vue schématique partielle en perspective de la virole interne et de pales d'un étage redresseur de la technique antérieure, et illustre une étape de fabrication de cet étage ;
- la figure 4 est une vue schématique partielle en coupe axiale de la virole interne et de pales de l'étage redresseur de la figure 3, une fois sa fabrication terminée ;
- la figure 5 est une vue en perspective illustrant l'outillage selon l'invention monté entre les viroles interne et externe de l'étage redresseur ;
- la figure 6 est une vue schématique de l'outillage selon l'invention ;
- la figure 7 est une vue en perspective d'une partie de cet outillage ;
- la figure 8 est une vue schématique partielle en coupe axiale d'une partie de l'étage redresseur sur lequel sont montés des outillages conformes à l'invention.

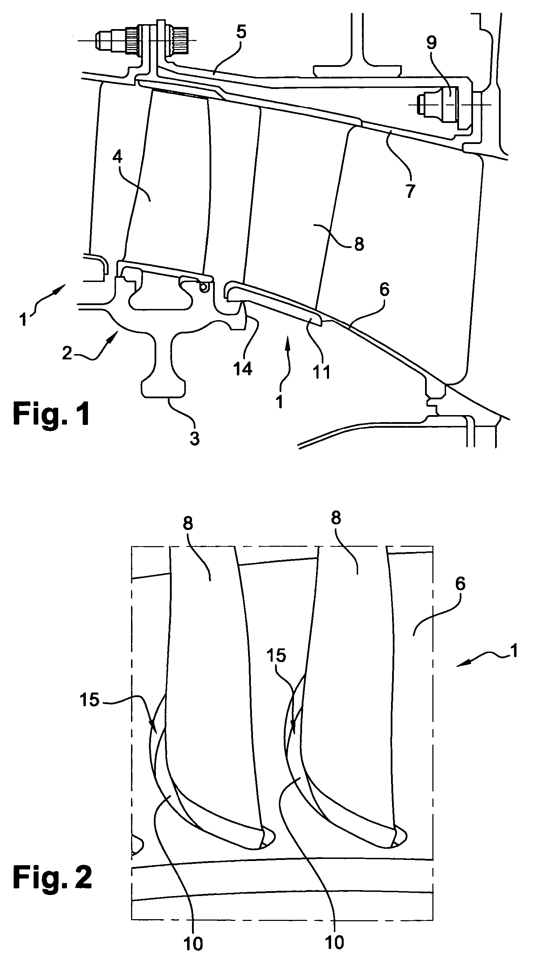

On se réfère d'abord à la figure 1 qui représente un compresseur basse-pression d'une turbomachine, telle qu'un turboréacteur ou un turbopropulseur d'avion, comprenant des étages redresseurs 1 entre lesquels sont montées des roues à aubes 2.

Chaque roue à aubes 2 comprend un disque 3 portant à sa périphérie une rangée annulaire d'aubes 4 sensiblement radiales entourées par un carter 5 du compresseur.

Chaque étage redresseur 1 comprend deux viroles, respectivement interne et externe 6, 7, entre lesquelles s'étend une rangée annulaire de pales 8 sensiblement radiales, la virole externe 7 étant fixée au carter 5 par des moyens du type vis-écrou 9.

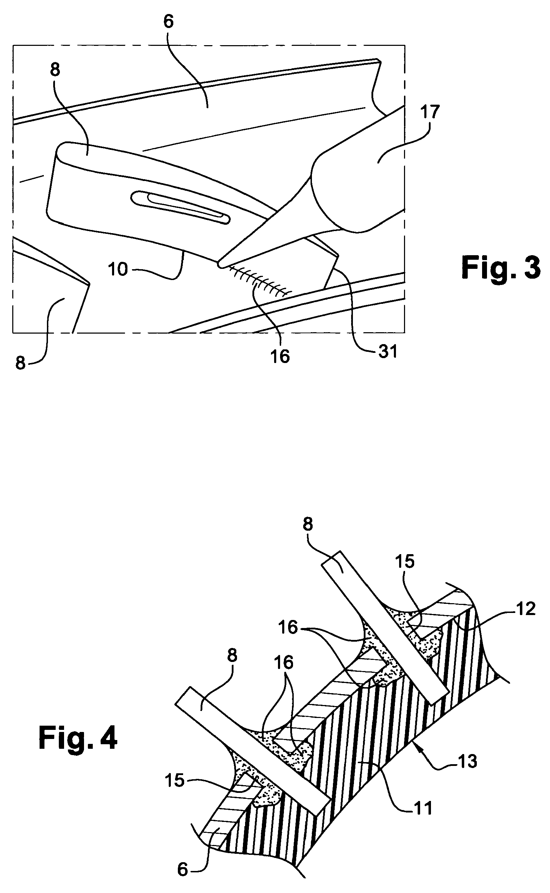

Les extrémités radialement externes des pales sont soudées à la virole externe 7. Les extrémités radialement internes des pales sont engagées avec jeu dans des orifices 10 de la virole interne 6 (figure 2) et sont rendues solidaires de cette virole interne 6 par application d'une résine polymérisable de scellement 11 sur la surface radialement interne 12 (figure 4) de la virole interne 6, dans laquelle sont noyées les extrémités radialement internes des pales 8.

Un primaire d'accrochage peut être appliqué sur la surface interne 12 de la virole interne 6 avant application de la résine de scellement 11.

Après durcissement, la résine de scellement 11 forme un bloc annulaire à l'intérieur de la virole interne 6, la périphérie interne de ce bloc définissant une piste abradable 13 destinée à coopérer avec une léchette 14 annulaire portée par le disque d'une roue à aubes 2, pour former un joint d'étanchéité du type à labyrinthe (figure 1).

Dans la technique actuelle, l'étape d'application de la résine de scellement est précédée d'une étape d'injection de la résine dans les jeux 15 précités, cette étape étant schématiquement représentée aux figures 3 et 4.

L'injection de la résine 16 est réalisée au moyen d'une seringue 17 qui est remplie et manipulée par un opérateur. La résine 16 est injectée dans les jeux 15, sur tout le pourtour des pales 8, de façon à combler ces jeux 15 et empêcher ensuite le passage de la résine 11 à travers ces jeux 15 lors de son application sur la surface interne 12 de la virole interne 6.

Cependant, comme expliqué dans ce qui précède, cette étape d'injection présente de nombreux inconvénients.

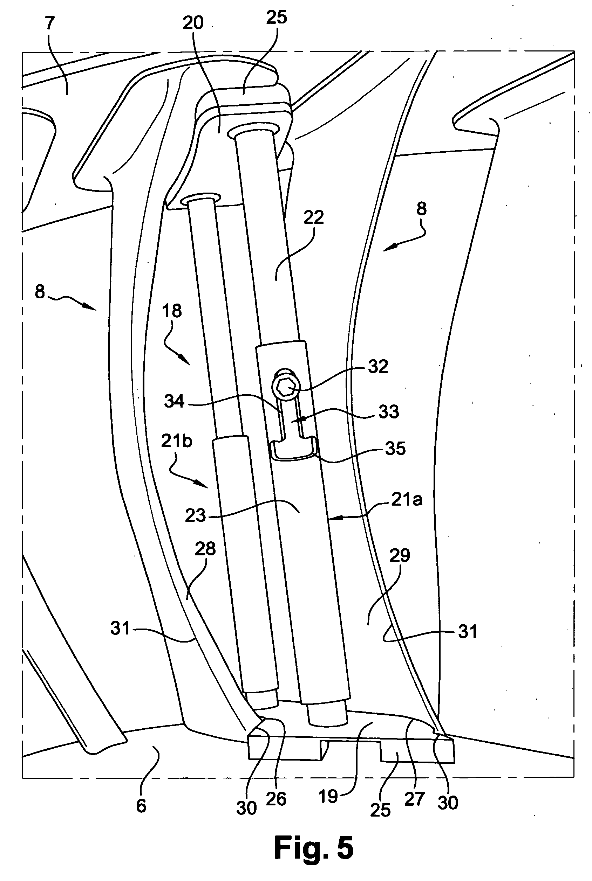

Afin d'y remédier, l'invention propose d'utiliser des outillages 18 dont la structure va maintenant être décrite en référence aux figures 5 à 8.

Chaque outillage 18 comporte une plaque d'appui interne 19 et une plaque d'appui externe 20 reliées par deux entretoises télescopiques 21a, 21 b comportant chacune deux parties mobiles tubulaires 22, 23 montées de façon coulissante l'une dans l'autre, entre une position d'introduction dans laquelle les plaques interne et externe 19, 20 sont rapprochées l'une de l'autre et une position de montage dans laquelle les plaques interne et externe 19, 20 sont écartées l'une de l'autre, des moyens élastiques 24 tendant à écarter les deux plaques 19, 20 en position de montage.

Les parties tubulaires 23, 22 sont fixées, par exemple à l'aide de vis non représentées, sur les plaques interne et externe 19, 20.

Chaque plaque 19, 20 peut être revêtue en tout ou partie d'une couche 25 de matériau déformable, par exemple en mousse de silicone. On peut par exemple utiliser une mousse connue sous la marque COHRIastic F-12 de la société Saint-Gobain Performance Plastics SA.

La couche 25 de matériau déformable est d'épaisseur par exemple comprise entre 4 et 6 mm.

La plaque interne 19 comporte deux bords latéraux 26, 27 dont les formes sont destinées à épouser celles des surfaces d'intrados et d'extrados 28, 29 des deux pales adjacentes 8.

Chaque bord latéral 26, 27 comporte en outre une zone 30 en saillie dans le plan de la plaque, destinée à venir en appui contre un bord de fuite 31 ou un bord d'attaque de la pale correspondante 8, de façon à former une butée de positionnement de l'outillage 18.

La partie tubulaire interne 22 de l'une 21 a des entretoises 21 a, 21 b comporte un plot formé par exemple par une vis 32, monté dans une ouverture 33 de la partie tubulaire externe 23. Cette ouverture 33 comporte une zone 34 de coulissement libre du plot 32 s'étendant dans l'axe de coulissement, c'est à-dire dans l'axe des parties tubulaires 22, 23, prolongée à son extrémité proche de la plaque interne 19 par au moins une zone de blocage 35 s'étendant perpendiculairement à la zone de coulissement 34, soit d'un seul côté de la zone de coulissement 34, soit de chaque côté de cette zone 34 comme représenté à la figure 5.

La partie tubulaire externe 23 comportant l'ouverture 33 est montée pivotante autour de la partie tubulaire interne 22 comportant le plot 32.

Ces deux parties tubulaires 22, 23, le plot 32 et l'ouverture 33 forment ainsi un système à baïonnette permettant de bloquer l'entretoise 21 a dans sa position d'introduction ou position rétractée (lorsque le plot 32 est engagé dans la zone 35 de l'ouverture 33), dans laquelle les deux plaques 19, 20 sont rapprochées l'une de l'autre à l'encontre de la force de rappel des moyens élastiques 24, ou au contraire d'autoriser l'écartement des deux plaques 19, 20 (lorsque le plot 32 est engagé dans la zone 34 de l'ouverture 33).

On va maintenant décrire le procédé de montage d'un étage redresseur 1, sectorisé ou non, selon l'invention.

Comme indiqué précédemment, l'étage redresseur 1 comporte une virole interne 6 et une virole externe 7 coaxiales, reliées par des pales 8 sensiblement radiales.

Le procédé selon l'invention consiste tout d'abord à engager les extrémités radialement externes des pales 8 dans des orifices de la virole externe 7 et à engager avec un jeu 15 les extrémités radialement internes desdites pales 8 dans des orifices 10 de la virole interne 6.

Les extrémités externes des pales 8 sont alors soudées à la virole externe 7.

On engage ensuite les outillages 18 entre les viroles interne et externe 6, 7, et circonférentiellement entre les pales 8. Lors de cette phase d'engagement, les plots 32 sont engagés dans les zones de blocage 35 des ouvertures 33 de sorte que les entretoises 21 a, 21 b sont maintenues en position d'introduction.

Lors de cette phase d'engagement également, on positionne les plaques internes 19 des outillages de façon à ce que les butées 30 viennent en appui sur les bords d'attaque 31 ou sur les bords de fuite des pales 8.

L'opérateur tourne ensuite les parties tubulaires externes 23 des entretoises 21 a concernées, de façon à ce que les plots 32 s'engagent dans les zones de coulissement 34 des ouvertures 33. Les moyens élastiques 24 rappellent alors les entretoises 21 a, 21 b dans leur position de montage (ou position déployée) de façon à appliquer les plaques internes et externes 19, 20, respectivement contre la surface externe de la virole interne 6 et contre la surface interne de la virole externe 7. Sous l'effet de l'effort de rappel, les couches 25 de mousse en silicone ont tendance à se déformer légèrement de manière notamment à ce que les bords latéraux 26, 27 des plaques internes 19 épousent de façon étanche les surfaces d'intrados et d'extrados 28, 29 des pales correspondantes 8.

Au contraire, les bords latéraux de la plaque externe 20 sont écartés des surfaces d'intrados 28 et d'extrados 29 des pales 8, comme cela est mieux visible à la figure 5.

Les efforts générés par les moyens élastiques 24 sont par exemple compris entre 2,5 et 3 kg par entretoise.

A cet instant, les plaques internes 19 recouvrent intégralement (ou quasi-intégralement) et de façon étanche les jeux 15 formés entre les ouvertures 10 de la virole interne 6 et les pales 8.

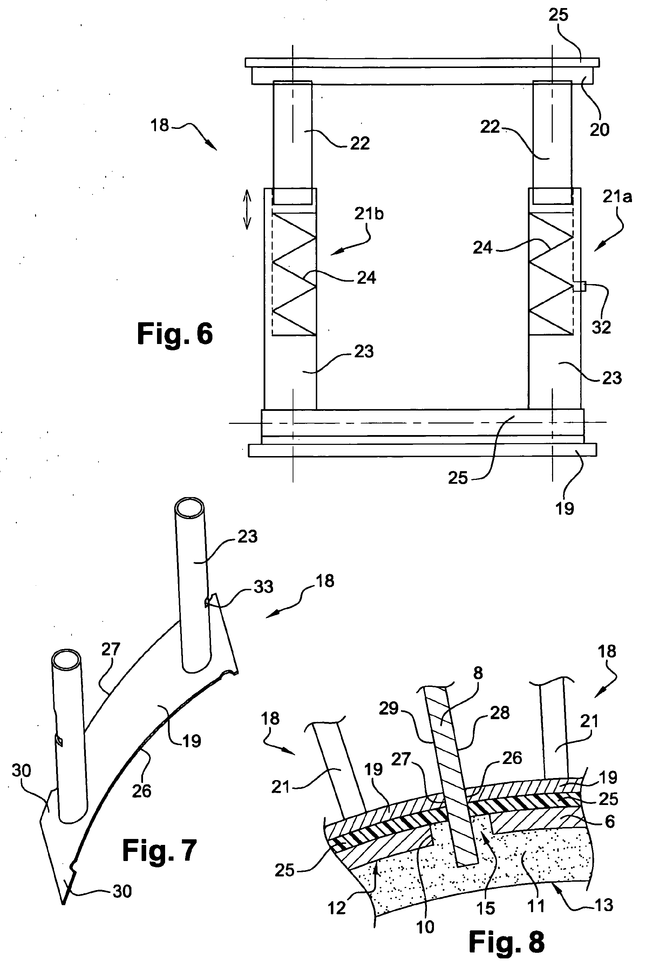

Une couche de résine polymérisable de scellement 11 est ensuite appliquée sur la surface radialement interne de la virole interne (figure 8). La résine pénètre dans les jeux 15 précités, les extrémités radialement internes des pales 8 étant également noyées dans la résine 11.

Grâce à la présence des plaques internes 19 et des couches 25, la résine ne s'écoule pas ou quasiment pas au-delà des jeux 15, sur la surface externe de la virole interne 6.

La résine 11 est ensuite portée pendant deux heures à une température de 120°C, dans une étuve.

Après durcissement, la résine de scellement 11 forme un bloc annulaire à l'intérieur de la virole interne 6, la périphérie interne 13 de ce bloc définissant une piste abradable destinée à coopérer avec une léchette annulaire 14 portée par le disque 3 d'un étage d'aubes mobiles 2, pour former un joint d'étanchéité du type à labyrinthe.

Les plaques internes et externes 19, 20 des outillages 18 sont ensuite à nouveau rapprochées les unes des autres, puis les plots 32 sont amenés dans les zones de blocage 35 des ouvertures 33, par rotation des parties tubulaires externes concernées 23. Les outillages 18 peuvent alors être extraits de l'étage redresseur 1.

Le temps de mise en place et de retrait d'un outillage 18 peut être estimé entre 10 et 20 secondes.

## Revendications

1. Procédé de montage d'un étage redresseur (1) comportant une virole interne (6) et une virole externe (7) coaxiales, reliées par des pales (8) sensiblement radiales, **caractérisé en ce qu'**il comporte les étapes consistant à :
(a) engager les extrémités radialement externes des pales (8) dans des orifices de la virole externe (7) et engager avec jeu (15) les extrémités radialement internes desdites pales (8) dans des orifices (10) de la virole interne (6),
(b) fixer les extrémités externes des pales (8) à la virole externe (7), par exemple par soudage,
(c) maintenir des plaques (19) en appui sur la surface externe de la virole interne (6), de façon à ce que les plaques (19) recouvrent de façon étanche et au moins partiellement les jeux (15) formés entre les ouvertures (10) de la virole interne (6) et les pales (8), les plaques (19) étant positionnées circonférentiellement entre les pales (8),
(d) appliquer une résine de scellement (11) sur la surface interne (12) de la virole interne (6), de façon à ce que la résine (11) remplisse les jeux (15) et que les extrémités radialement internes des pales (8) soient noyées dans la résine (11).

2. Procédé selon la revendication 1, **caractérisé en ce que** la résine de scellement (11) est à base de silicone, par exemple de type RTV.

3. Procédé selon la revendication 1 ou 2, **caractérisé en ce que**, lors de l'étape (c), on dispose des outillages (18) circonférentiellement entre les pales (8), chaque outillage (18) comportant une plaque interne (19) venant en appui sur la surface externe de la virole interne (6) et un organe d'appui externe, tel par exemple qu'une plaque externe (20), venant en appui sur la surface interne de la virole externe (7), des moyens élastiques (24) étant disposés entre la plaque interne (19) et l'organe d'appui externe (20) de façon à contraindre la plaque interne (19) en appui sur la virole interne (6).

4. Procédé selon la revendication 3, **caractérisé en ce que** chaque outillage (18) peut occuper une position d'introduction dans laquelle la plaque interne (19) et l'organe d'appui externe (20) sont rapprochés l'un de l'autre, à l'encontre des moyens élastiques (24), et une position de montage dans laquelle la plaque interne (19) et l'organe d'appui externe (20) sont écartés l'un de l'autre à l'aide des moyens élastiques (24) de façon à contraindre la plaque interne (19) en appui sur la virole interne (6).

5. Procédé selon l'une des revendications 1 à 4, **caractérisé en ce que** chaque plaque interne (19) comporte deux bords latéraux (26, 27) épousant les formes des surfaces d'intrados (28) et d'extrados (29) des deux pales adjacentes (8) correspondantes.

6. Procédé selon l'une des revendications 1 à 5, **caractérisé en ce que** chaque plaque interne (19) comporte au moins une butée de positionnement (30) venant en appui sur un bord de fuite (31) ou un bord d'attaque de l'une des aubes adjacentes (8) correspondantes.

7. Outillage (18) destiné au montage d'un étage redresseur (1) de turbomachine, comportant une plaque d'appui interne (19) et un organe d'appui externe, tel par exemple qu'une plaque d'appui externe (20), reliés par au moins une entretoise (21 a, 21 b) à longueur réglable entre une position d'introduction dans laquelle la plaque interne (19) et l'organe d'appui externe (20) sont rapprochés l'un de l'autre et une position de montage dans laquelle la plaque interne (19) et l'organe d'appui externe (20) sont écartés l'un de l'autre, des moyens élastiques (24) tendant à écarter la plaque interne (19) et l'organe d'appui externe (20) en position de montage.

8. Outillage selon la revendication 7, **caractérisé en ce que** la plaque interne (19) est revêtue d'une couche (25) de matériau déformable, par exemple en mousse de silicone.

9. Outillage selon la revendication 7 ou 8, **caractérisé en ce que** l'entretoise (21 a, 21 b) comporte deux parties tubulaires (22, 23) montées coulissantes l'une dans l'autre, l'une (22) desdites parties comportant un plot (32) monté de façon déplaçable dans une ouverture (33) de l'autre (23) desdites parties, ladite ouverture (33) comportant une zone (34) de coulissement libre du plot (32) s'étendant dans l'axe de coulissement, prolongée par au moins une zone (35) de blocage du plot (32) s'étendant perpendiculairement à la zone (34) de coulissement.

10. Outillage selon l'une des revendications 7 à 9, **caractérisé en ce que** l'organe d'appui externe se présente sous la forme d'une plaque externe (20) revêtue d'une couche (25) de matériau déformable, par exemple en mousse de silicone.

## Patentansprüche

1. Verfahren zur Montage einer Gleichrichterstufe (1), die einen koaxialen Innenmantel (6) und Außenmantel (7) umfasst, die über deutlich radiale Schaufeln (8) miteinander verbunden sind, **dadurch gekennzeichnet, dass** es Schritte enthält, die darin besehen, dass:
(a) sich die radialen äußeren Enden der Schaufeln (8) in Öffnungen des Außenmantels (7) schieben und sich die radial internen Enden besagter Schaufeln (8) mit einem Spiel (15) in die Öffnungen (10) des Innenmantels (6) einfügen.
(b) die äußeren Enden der Schaufeln (8) zum Beispiel durch Schweißung am Außenmantel (7) befestigt sind,
(c) die Platten (19) so auf der Außenfläche des Innenmantels (6) aufliegen, dass die Platten (19) die Spiele (15), die zwischen den Öffnungen (10) des Innenmantels (6) und den Schaufeln (8) entstehen, dicht oder zumindest teilweise bedecken, wobei die Platten um die Schaufeln (8) herum angeordnet sind,
(d) ein Vergießharz (11) auf die Innenfläche (12) des Innenmantels (6) aufgetragen wird, so dass das Harz (11) das Spiel (15) ausfüllt und die radial inneren Enden der Schaufeln (8) in das Harz (11) eingetaucht sind.

2. Verfahren nach Anspruch 1, **dadurch gekennzeichnet, dass** das Vergiessharz (11) aus Silikon, wie zum Beispiel RTV-Silikon, hergestellt ist.

3. Verfahren nach Anspruch 1 oder 2, **dadurch gekennzeichnet, dass** man bei Schritt (c) Hilfsmittel (18) über den ganzen Umfang zwischen die Schaufeln (8) legt, wobei jedes Hilfsmittel (18) eine Innenplatte (19) aufweist, die auf der Außenfläche des Innenmantels (6) aufliegt, und ein äußeres Auflageelement, wie zum Beispiel eine Außenplatte (20), die auf der Innenfläche des Außenmantels (7) aufliegt, elastische Teile (24), die so zwischen der Innenplatte (19) und dem externen Auflageelement (20) angeordnet sind, dass die Innenplatte (19) sich zwangsläufig auf den Innenmantel (6) legt.

4. Verfahren nach Anspruch 3, **dadurch gekennzeichnet, dass** jedes Hilfsmittel (18) eine Einschubposition einnehmen kann, in welcher die Innenplatte (19) und das äußere Auflageelement (20) durch Einwirkung elastischer Vorrichtungen (24) angenähert werden, sowie eine Montageposition, in der die Innenplatte (19) und das äußere Auflageelement (20) durch Einwirkung elastischer Vorrichtungen (24) so getrennt werden, dass die Innenplatte (19) auf dem Innenmantel (6) aufliegt.

5. Verfahren nach einem der Ansprüche 1 bis 4, **dadurch gekennzeichnet, dass** jede Innenplatte (19) zwei Seitenkanten (26, 27) enthält, die sich an die Formen der Unterseite (28) und der Oberseite (29) der beiden daneben liegenden entsprechenden Schaufeln (8) anpassen.

6. Verfahren nach einem der Ansprüche 1 bis 5, **dadurch gekennzeichnet, dass** jede Innenplatte (19) mindestens einen Positionieranschlag (30) enthält, welcher an einer Hinterkante (31) oder einer Vorderkante einer der danebenliebenden Blätter (8) aufliegt.

7. Hilfsmittel (18), das der Montage einer Gleichrichterstufe (1) einer Turbomaschine dient und eine innere Auflageplatte (19) und ein äußeres Auflageelement umfasst, wie zum Beispiel eine äußere Auflageplatte (20), die über mindestens eine Zwischenstrebe (21a, 21b) miteinander verbunden sind und deren Länge verstellbar ist zwischen einer Einschubposition, in welcher die Innenplatte (19) und das äußere Auflageelement (20) angenähert werden, und einer Montageposition, in der die Innenplatte (19) und das äußere Auflageelement (20) voneinander getrennt werden, und elastische Vorrichtungen (24), die die Innenplatte (19) und das äußere Auflageelement (20) getrennt in Montageposition halten.

8. Hilfsmittel nach Anspruch 7, **dadurch gekennzeichnet, dass** die Innenplatte (19) mit einer Schicht (25) eines verformbaren Materials, wie zum Beispiel Silikonschaum, bedeckt ist.

9. Hilfsmittel nach Anspruch 7 oder 8, **dadurch gekennzeichnet, dass** die Zwischenstrebe (21a, 21b) zwei röhrenförmige Teile (22, 23) enthält, die zueinander verschiebbar montiert sind, wobei der eine Teil (22) einen Stift (32) enthält, der in einer Öffnung (33) des anderen Teils (23) verschiebbar montiert ist, und die Öffnung (33) einen Bereich (34) aufweist, in dem der Stift (32) ungehindert auf der Gleitachse gleiten kann, wobei diese durch mindestens einen Sperrbereich (35) des Stiftes (32), welcher senkrecht zum Gleitbereich (34) verläuft, verlängert wird.

10. Hilfsmittel nach einem der Ansprüche 7 bis 9, **dadurch gekennzeichnet, dass** das äußere Auflageelement eine Außenplatte (20) ist, die mit einer Schicht (25) eines verformbaren Materials, zum Beispiel Silikonschaum, bedeckt ist.

## Claims

1. A method of mounting a guide vane stage (1) comprising an inner shroud (6) and an outer shroud (7) that are coaxial, being interconnected by substantially radial airfoils (8), the method being **characterized in that** it comprises the steps consisting in:
a) engaging the radially outer ends of the airfoils (8) in orifices in the outer shroud (7), and engaging the radially inner ends of said airfoils (8) with clearance gaps (15) in orifices (10) in the inner shroud (6);
b) fastening the outer ends of the airfoils (8) to the outer shroud (7), e.g. by welding;
c) holding plates (19) bearing against the outer surface of the inner shroud (6) so that the plates (19) cover the gaps (15) formed between the openings (10) in the inner shroud (6) and the airfoils (8) at least partially and in leaktight manner, the plates (19) being positioned circumferentially between the airfoils (8);
d) applying a sealing resin (11) to the inner surface (12) of the inner shroud (6) in such a manner that the resin (11) fills the gaps (15) and the radially inner ends of the airfoils (8) are embedded in the resin (11).

2. A method according to claim 1, **characterized in that** the sealing resin (11) is based on silicone, e.g. being of the RTV type.

3. A method according to claim 1 or claim 2, **characterized in that** during step c), tooling (18) is placed circumferentially between the airfoils (8), each piece of tooling (18) comprising an inner plate (19) coming to bear against the outer surface of the inner shroud (6) and an outer bearing member, such as an outer plate (20), coming to bear against the inner surface of the outer shroud (7), resilient means (24) being arranged between the inner plate (19) and the outer bearing member (20) so as to constrain the inner plate (19) to bear against the inner shroud (6).

4. A method according to claim 3, **characterized in that** each piece of tooling (18) is capable of occupying an introduction position in which the inner plate (19) and the outer bearing member (20) are moved towards each other against the resilient means (24), and a assembly position in which the inner plate (19) and the outer bearing member (20) are moved apart from each other with the help of the resilient means (24) so as to constrain the inner plate (19) to bear against the inner shroud (6).

5. A method according to any one of claims 1 to 4, **characterized in that** each inner plate (19) has two lateral edges (26, 27) matching the shapes of the pressure side and suction side surfaces (28, 29) of the two corresponding adjacent airfoils (8).

6. A method according to any one of claims 1 to 5, **characterized in that** each inner plate (19) includes at least one positioning abutment (30) that comes to bear against a trailing edge (31) or a leading edge of one of the corresponding adjacent vanes (8).

7. Tooling (18) for use in assembling a turbine engine guide vane stage (1), the tooling comprising an inner bearing plate (19) and an outer bearing member, such as for example an outer bearing plate (20), that are connected together by at least one spacer (21a, 21b) of length that is adjustable between an insertion position in which the inner plate (19) and the outer bearing member (20) are moved towards each other, and a assembly position in which the inner plate (19) and the outer bearing member (20) are spaced apart from each other, resilient means (24) tending to space the inner plate (19) and the outer bearing member (20) apart in the assembly position.

8. Tooling according to claim 7, **characterized in that** the inner plate (19) is covered in a layer (25) of deformable material, e.g. of silicone foam.

9. Tooling according to claim 7 or claim 8, **characterized in that** the spacer (21a, 21b) comprises two tubular portions (22, 23) that are slidably mounted one in the other, one of said portions (22) including a stud (32) mounted to be movable in an opening (33) in the other one of said portions (23), said opening (33) including a zone (34) in which the stud (32) can slide freely, which zone extends along the sliding axis and is extended by at least one zone (35) for locking the stud (32), which zone extends perpendicularly to the sliding zone (34).

10. Tooling according to any one of claims 7 to 9, **characterized in that** the outer bearing member is in the form of an outer plate (20) covered in a layer (25) of deformable material, e.g. of silicone foam.
